Europäisches Patentamt

European Patent Office

Office européen des brevets

(19) (11) EP 0 790 287 A1

(12) **DEMANDE DE BREVET EUROPEEN**

(43) Date de publication:
**20.08.1997 Bulletin 1997/34**

(51) Int Cl.⁶: **C09K 3/18**

(21) Numéro de dépôt: **97870015.1**

(22) Date de dépôt: **13.02.1997**

(84) Etats contractants désignés:
**DK ES FR NL**

(30) Priorité: **14.02.1996 BE 9600125**

(71) Demandeur: **S.A. CICA Compagnie Industrielle de Chimie Appliquée**
**1180 Bruxelles (BE)**

(72) Inventeur: **Mignard, Joseph**
**3051 Sint-Joris-Weert (BE)**

(74) Mandataire: **Goegebeur, Erik**
**c/o Bugnion S.A.**
**Rue de Namur, 43, Bte 3**
**1000 Bruxelles (BE)**

(54) **Déverglaçant**

(57) Produit déverglaçant à deux composés séparés, un composé liquide à base de nitrite de sodium et un composé solide à base de granulés d'urée. Mis en oeuvre conjointement, à raison de un mole d'urée/deux môles de nitrite, dans les conditions météorologiques d'une opération de déverglaçage, les deux composants déverglaçant efficacement sans réagir entre eux, mais après réchauffement, s'annihilent.

EP 0 790 287 A1

## Description

La présente invention concerne un produit déverglaçant et un procédé pour sa mise en oeuvre.

Pour déverglacer des routes ou des trottoirs, la technique la plus couramment utilisée consiste à répandre du chlorure de sodium sur la pellicule de verglas déjà formée ou éventuellement sur une route encore sèche, lorsque les informations météorologiques permettent de prévoir une chute de pluie verglaçante imminente. La glace fond ou ne se forme pas à cause de l'abaissement important du point de congélation d'une solution de chlorure de sodium par rapport à celui de l'eau pure : à titre d'exemple, une solution aqueuse de chlorure de sodium à 23 % a un point de congélation de - 20,5°C.

On reproche à cette technique de laisser une charge résiduelle de chlorure de sodium dans l'environnement (eaux de ruissellement, sols environnants) et de contribuer à la corrosion des carrosseries des véhicules. C'est également un herbicide.

On a également proposé l'emploi d'autres substances capables d'abaisser le point de congélation de l'eau pour déverglacer des surfaces exposées au verglas, notamment lorsqu'une grande rapidité d'action et une grande efficacité à basse température sont requises.

Le nitrite de sodium a été utilisé pour déverglacer des pistes d'aérodromes (par exemple sous la marque "FRIGOL" de la société S.P.C.A.) . Cette substance est hygroscopique et très soluble dans l'eau et s'est révélée un déverglaçant très efficace. Cependant, les gouttelettes de solution de nitrite soulevées lors du décollage et de l'atterrissage d'avions, notamment lorsqu'elles entrent en contact avec les parties chaudes de ceux-ci, se sont révélées corrosives pour les pièces d'avions. Ce problème a cependant pu être surmonté en ajoutant au nitrite des inhibiteurs de corrosion connus. Par ailleurs, les nitrites ont tendance à s'oxyder en nitrates. Bien que les nitrates soient utilisés comme fertilisants, on a reproché aux nitrates de contribuer à la charge en azote des eaux de ruissellement. C'est pourquoi, certaines législations ont interdit l'emploi de produits à base de nitrites bien qu'ils soient par ailleurs efficaces.

On a également proposé l'emploi de glycol. Ce produit a également été abandonné à cause de la charge qu'il fait peser sur l'environnement du fait de son effet bactéricide.

On a également utilisé l'urée pour détruire des couches de verglas. Ce produit est par ailleurs un fertilisant et un désinfectant. L'emploi de ce produit a aussi été abandonné, pour des raisons écologiques et parce-qu'il est fortement corrosif vis-à-vis de pièces en matières synthétiques, telles que des gaines de fils.

Il se pose donc le problème de trouver un produit capable de déverglacer efficacement une surface exposée au verglas, par exemple une piste d'aérodrome, sans risquer de contribuer à la corrosion des véhicules, aériens ou autres, amenés à y circuler et en satisfaisant également aux prescriptions en matière de rejets dans l'environnement.

Ce problème est résolu selon l'invention grâce à un produit déverglaçant à deux composants, constitué d'un composant liquide comprenant une solution aqueuse de nitrite de métal alcalin ou alcalino-terreux et d'un composant solide constitué substantiellement de particules d'urée.

Le nitrite de sodium est préféré car c'est un produit industriel peu onéreux. Le nitrite de potassium est également un produit industriel courant. Le nitrite de calcium est parfois utilisé comme inhibiteur de corrosion.

Les concentrations de nitrite de sodium des solutions aqueuses utilisées pour déverglacer efficacement une surface exposée au verglas sont connues dans l'état de la technique. On préfère utiliser des solutions comprenant entre 25 et 35 % en poids de nitrite de sodium.

L'urée est utilisée de préférence sous forme de granulés d'une granulométrie de l'ordre de 1 à 2 mm mais peut être utilisée également sous forme de granulés plus grossiers de l'ordre de 5 mm ou également de poudre plus fine de 0,1 mm, voire moins.

Les deux composants du produit déverglaçant selon l'invention doivent être stockés séparément. En effet, on sait que les nitrites de métaux alcalins en solution sont partiellement hydrolysés. Les phénomènes peuvent être représentés par les équations :

$$2NaNO_2 \rightleftarrows 2Na^+ + NO_2^- + NO^- \qquad (1)$$

et

$$NO_2^- + NO^- + H_2O \rightleftarrows 2HNO_2 \qquad (2)$$

L'acide nitreux réagit à température ordinaire avec l'urée selon la réaction d'oxydation suivante :

$$OC\ (NH_2)_2\ +\ 2HNO_2\ \rightarrow\ 2N2\uparrow\ +\ CO2\uparrow\ +\ 3H_2O \qquad\qquad (3)$$

Le déverglaçant selon l'invention est mis en oeuvre en appliquant sur la surface à déverglacer le composant liquide dans les conditions d'utilisation d'un déverglaçant liquide à base de nitrite, conditions qui sont connues de l'homme du métier.

Simultanément ou ensuite, on ajoute le composant solide à base d'urée.

Un tel procédé paraît surprenant à un homme du métier à cause de la réaction entre l'urée et l'acide nitreux mentionnée ci-dessus, qui, lorsqu'on emploie du nitrite de sodium, s'exprime quantitativement par l'équation

$$2NaNO_2\ +\ OC\ (NH_2)_2\ \rightarrow\ 2N_2\uparrow\ +\ NA_2CO_3\ +\ 2H_2O \qquad\qquad (4)$$

On s'attendrait donc à ce que en employant simultanément ou de façon concomitante les deux réactifs, ceux-ci s'annihilent mutuellement en ne laissant subsister que du carbonate de sodium et de l'eau ; mais on a constaté que dans les conditions physico-chimiques d'utilisation d'un déverglaçant sur une surface exposée au verglas, notamment du fait de la basse température, la réaction ne se fait pas, ou tout au moins présente une cinétique extrêmement lente. L'urée et le nitrite co-existent dans le milieu aqueux liquide se trouvant à une température voisine ou inférieure à 0°C. Par nitrite il faut entendre ici l'ensemble des espèces $HNO_2$, $NO2^-$, $NO^-$ susceptibles de coexister du fait des équilibres des équations 1 et 2.

Par contre lorsqu'un tel mélange est réchauffé, la réaction entre urée et nitrite progresse et s'effectue quantitativement. On peut donc éliminer totalement aussi bien l'urée que le nitrite de l'eau collectée à l'issue de l'opération de déverglaçage en portant celle-ci à plus haute température avant de la rejeter dans l'environnement ou dans les circuits publics, à condition que l'urée et le nitrite de soude s'y trouvent mélangés à raison d'une mole d'urée pour deux moles de nitrite.

L'invention et ses avantages seront mieux compris de l'homme du métier grâce à la description détaillée ci-dessous de sa mise en oeuvre.

On utilise de préférence selon l'invention une solution aqueuse de nitrite de sodium à une concentration de l'ordre de 25 ou 35 % en poids. L'eau d'une solution à 25 % commence à cristalliser à - 18°C et l'eau d'une solution à 35 % en poids commence à cristalliser à - 26°C. A des températures faiblement négatives, on peut également utiliser des solutions plus diluées, mais il faut alors utiliser de plus grands volumes. A plus forte concentration, on se trouve proche des concentrations de saturation, ce qui peut provoquer le bouchage de gicleurs.

Le pH du composant liquide selon l'invention est compris entre 7,4 et 9 ; il est de préférence de l'ordre de 8,2 à 8,3.

La solution peut également contenir entre 0,1 et 5%, de préférence entre 0,5 et 1 %, d'inhibiteurs de corrosion pour préserver les pièces en fer, acier, aluminium ou matière plastique, éventuellement avec des détergents ou co-solvants utiles pour obtenir une solution stable.

Ce composant liquide peut être mis en oeuvre dans les mêmes conditions que les produits déverglaçants cités plus haut, par exemple en répandant le produit sur une chaussée verglacée, à partir d'un véhicule équipé d'un réservoir et d'un système d'aspersion à gicleurs.

A partir du même véhicule, ou d'un deuxième véhicule, on répand les granulés d'urée sur la pellicule liquide qui commence à se former sur la surface verglacée après aspersion avec le composant liquide, dans des quantités telles que globalement soient répandues une mole d'urée pour deux moles de nitrite.

En-dessous de 0°C et jusqu'à une température d'environ + 2°C, il n'y a pratiquement pas de réaction chimique entre les granulés d'urée et le nitrite en solution, de sorte que les deux produits peuvent agir contre la couche de verglas. L'action de la solution de nitrite a déjà été décrite.

A leurs points d'impact, les granulés d'urée provoquent la formation de trous dans la couche de verglas, fragmentant celle-ci. Par ces trous, la solution de nitrite pénètre plus facilement sous la surface, ce qui accélère son action. D'autre part, comme la surface est déjà mouillée au moment ou les granulées d'urée atteignent celle-ci, ces granulés ont tendance à y adhérer et ont moins tendance à être dispersés ou localement accumulés par des courants d'air ou le vent. L'action de fragmentation de la couche de glace par l'urée est donc plus homogène.

Les deux composants du produit selon l'invention n'exercent donc pas seulement leur action propre sur la couche de glace mais présentent une synergie d'effets.

Le liquide provenant de la fusion de la glace, dans lequel se trouvent dissous le nitrite et l'urée, a une température de l'ordre de 0°C ou négative. Lorsqu'il est entraîné dans une canalisation d'égouttage enterrée à plus de 1 mètre de profondeur, comme le veut la pratique courante, sa température s'élève à environ +10 / +12°C. La réaction entre l'urée et le nitrite s'effectue alors quantitativement.

A défaut d'une canalisation enterrée suffisamment profondément pour que la température qui y règne en toute saison soit au moins de l'ordre de 10°C, il convient, dans le procédé selon la présente invention de faire traverser au liquide glacé une enceinte se trouvant à une température égale ou supérieure à 10°C ou de porter ce liquide à une telle température par tout autre moyen.

<u>Exemple :</u>

L'essai est réalisé dans les conditions climatiques d'une application pratique.

On arrose uniformément à l'aide de 1 litre d'eau froide une plaque de béton de 1 m2, maintenue à une température ambiante de - 4°C. Il se forme une couche de glace d'environ 1 mm d'épaisseur. Après la formation de la couche de glace, on applique par pulvérisation 87 grammes de produit liquide déverglaçant CICASOL MG-85 (produit commercialisé par la société CICA et contenant 35 % en poids de $NaNO_2$). On saupoudre ensuite la plaque de 13 grammes d'urée en granulés. On observe la dissolution des granulés d'urée et la fusion de la couche de glace, mais pas de dégagement gazeux. Après fusion totale, le liquide est collecté puis porté à une température de +12°C. A cette température on observe une réaction avec dégagement d'azote gazeux dans l'air. L'analyse de la solution révèle la présence de carbonate de sodium à une concentration d'environ 46 grammes par litre et la disparition quasi quantitative de l'urée et du nitrite.

Le rejet de l'eau chargée de carbonate de sodium ne pose pas de problèmes particuliers. Ce produit est relativement peu soluble et peut se décanter ; il peut également, avec le $CO_2$ de l'air, former du bicarbonate, également peu soluble. Par ailleurs, sa concentration diminuera dans des proportions importantes du fait des quantités d'eau présente aussi bien dans les égouts que, le cas échéant, dans les bassins de décantation.

L'invention peut faire l'objet de divers modes d'exécution, aussi bien en ce qui concerne le produit déverglaçant que son procédé de mise en oeuvre.

Si à la place de nitrite de sodium, on utilise du nitrite de calcium, l'eau d'écoulement ne sera chargée, à la fin du procédé, que de carbonate de calcium, qui est un composant des eaux naturelles, en équilibre avec le bicarbonate de calcium et le $CO_2$ de l'air.

On peut traiter une chaussée sèche avec la solution de nitrite, avant la formation de verglas, et répandre ultérieurement les granulés d'urée.

On peut également traiter préventivement ou curativement la chaussée avec la solution de nitrite de soude et ajouter l'urée seulement au moment de la collecte de la glace fondue contenant en solution du nitrite de sodium, du nitrite de potassium ou autre.

Le produit selon l'invention peut être fourni aux utilisateurs en laissant à ces derniers le soin de doser et de régler les appareils de dispersion de manière à répandre les deux composants dans les bonnes proportions. On peut également fournir le produit en deux composants pré-dosés : à titre d'exemple, pour une quantité totale de produit de 100 kg, il convient de doser une quantité de 87 kg de solution à 35 % de nitrite de sodium pour une dose de composant solide contenant 13 kg de granulés d'urée.

**Revendications**

1. Produit déverglaçant, caractérisé en ce qu'il est constitué de deux composants, un premier composant liquide comprenant une solution aqueuse de nitrite d'un métal alcalin ou alcalino-terreux, et un deuxième composant solide constitué substantiellement de particules d'urée.

2. Produit déverglaçant selon la revendication 1 caractérisé en ce que ledit nitrite de métal alcalin ou alcalino-terreux est le nitrite de sodium.

3. Déverglaçant selon l'une des revendications 1 ou 2, caractérisé en ce que la concentration dudit nitrite dans ledit composant liquide est compris entre 25 % et 35 % en poids.

4. Produit déverglaçant selon l'une des revendications 1 à 3, caractérisé en ce que le pH dudit composant liquide est compris entre 7,4 et 9 et de préférence entre 8,2 et 8,3.

5. Produit déverglaçant selon l'une des revendications 1 à 4, caractérisé en ce que ledit composant liquide comprend des additifs choisis parmi les agents anticorrosion, les détergents et les co-solvants.

6. Produit déverglaçant selon la revendication 5, caractérisé en ce que la concentration totale desdits additifs est comprise entre 0,1 et 5 % et de préférence entre 0,5 et 1%.

7. Produit déverglaçant selon l'une quelconque des revendications 1 à 6, caractérisé en ce que lesdites particules d'urée sont des granulés dont la granulométrie est comprise entre 0,1 et 5 mm et de préférence entre 1 et 2 mm.

8. Produit déverglaçant selon l'une des revendications 1 à 7, prédosé de façon à comprendre une mole d'urée pour deux môles de nitrite.

9. Déverglaçant selon la revendication 8, caractérisé en ce qu'il comprend, par unité de poids, dans un premier récipient 0,87 unités en poids de composant liquide contenant 35 % en poids de nitrite de sodium, et dans un deuxième récipient 0,13 unités en poids d'urée à l'état solide.

10. Procédé de déverglaçage au moyen d'un produit déverglaçant selon l'une quelconque des revendications 1 à 9, caractérisé en ce qu'on applique sur la surface à déverglacer ledit composant liquide dans les conditions d'utilisation d'un déverglaçant liquide à base de nitrite, qu'on applique ledit composant solide sur ladite surface dans des proportions telles qu'à deux môles de nitrite appliquées correspond une mole d'urée appliquée, qu'on collecte la masse liquide résultant des opérations précédentes et qu'on porte ladite masse à une température supérieure à +10°C.

11. Procédé de déverglaçage au moyen d'un produit déverglaçant selon l'une quelconque des revendications 1 à 9, caractérisé en ce qu'on applique sur la surface à déverglacer ledit composant liquide dans les conditions d'utilisation d'un déverglaçant liquide à base de nitrite, qu'on collecte la masse liquide résultant de l'opération précédente, qu'on ajoute à ladite masse liquide ledit composant solide dans des proportions telles qu'à deux moles de nitrite correspondent une mole d'urée et qu'on porte le mélange obtenu à une température supérieure à + 10°C.

12. Application d'un procédé selon l'une des revendications 10 ou 11, au déverglaçage d'une piste d'aérodrome.

**Office européen des brevets**

**RAPPORT DE RECHERCHE EUROPEENNE**

Numero de la demande
EP 97 87 0015

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DATABASE WPI<br>Week 7051<br>Derwent Publications Ltd., London, GB;<br>AN 70-95171R<br>XP002013983<br>& SU 264 377 A (GORBONOS EP EGOROV VP SMA)<br>* abrégé * | 1-12 | C09K3/18 |
| Y | DE 21 24 091 A (LENTIA GMBH) 23 Novembre 1972<br>* page 6, alinéa 3; revendications 1,2 * | 1-12 | |
| Y | GB 1 070 169 A (STANDARD OIL COMPANY) 1 Juin 1967<br>* revendications 1-3; exemple 7 * | 1-12 | |
| A | DATABASE WPI<br>Week 8931<br>Derwent Publications Ltd., London, GB;<br>AN 89-225727<br>XP002013984<br>& JP 01 163 285 A (27-06-89)<br>* abrégé * | 1-12 | |
| A | PATENT ABSTRACTS OF JAPAN<br>vol. 012, no. 365 (C-532)<br>& JP 63 117089 A (MOTOTADA), 21 Mai 1988,<br>* abrégé * | 1-12 | |

DOMAINES TECHNIQUES RECHERCHES (Int.Cl.6)

C09K

Le présent rapport a été établi pour toutes les revendications

| Lieu de la recherche | Date d'achèvement de la recherche | Examinateur |
|---|---|---|
| LA HAYE | 9 Avril 1997 | Nicolas, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)